# EUROPÄISCHE PATENTSCHRIFT

(11) **EP 3 440 492 B1**
(45) Veröffentlichungstag und Bekanntmachung des Hinweises auf die Patenterteilung: **12.03.2025**
(21) Anmeldenummer: 17717127.9
(22) Anmeldetag: 07.04.2017
(51) Int. Cl.: G02B 21/36

(54) **VERFAHREN UND MIKROSKOP ZUM UNTERSUCHEN EINER PROBE**
METHOD AND MICROSCOPE FOR EXAMINING A SAMPLE
PROCÉDÉ ET DISPOSITIF D'ANALYSE D'UN ÉCHANTILLON

(30) Priorität: 08.04.2016 LU 93022
(43) Veröffentlichungstag der Anmeldung: 13.02.2019
(73) Patentinhaber: Leica Microsystems CMS GmbH, 35578 Wetzlar (DE)
(72) Erfinder: KNEBEL, Werner, 76709 Kronau (DE); FAHRBACH, Florian, 68167 Mannheim (DE)
(74) Vertreter: Schaumburg und Partner Patentanwälte mbB
(86) Internationale Anmeldenummer: PCT/EP2017/058420
(87) Internationale Veröffentlichungsnummer: WO 2017/174792

(56) Entgegenhaltungen:
- WO-A1-2015/184124
- US-A1- 2012 206 798
- US-A1- 2015 098 126
- OBER R J ET AL: "Simultaneous Imaging of Different Focal Planes in Fluorescence Microscopy for the Study of Cellular Dynamics in Three Dimensions", IEEE TRANSACTIONS ON NANOBIOSCIENCE, IEEE SERVICE CENTER, PISCATAWAY, NY, US, vol. 3, no. 4, 1 December 2004 (2004-12-01), pages 237 - 242, XP011122942, ISSN: 1536-1241, DOI: 10.1109/TNB.2004.837899

## Beschreibung

Die Erfindung betrifft ein Verfahren zum Untersuchen einer Probe. Die Erfindung betrifft außerdem ein Mikroskop, insbesondere zum Ausführen eines solchen Verfahrens.

Oftmals ist es bei der Untersuchung einer Probe wichtig, ganze Probenvolumina schnell abbilden zu können. Hierzu kommt insbesondere die Verwendung eines SPIM-Mikroskops in Betracht.

Die SPIM-Technik (Single Plane Illumination Microscopy), bei der eine schichtweise Beleuchtung der Probe erfolgt, erlaubt eine schnellere und probenschonendere Erfassung von Bilddaten, als beispielsweise bei einer punktweisen Abtastung einer Probe. Ein bekanntes Einsatzgebiet der SPIM-Technologie ist der Bereich der Fluoreszenz-Mikroskopie, wobei Fluorophore in der Probe mit Laserlicht angeregt werden. Bei der SPIM-Technologie findet hierbei eine Anregung nur in einer von einem Beleuchtungslichtblatt statt. Eine Schädigung der Probe durch Beleuchtungslicht in anderen Ebenen ist hierdurch vermieden.

Eine nach dem SPIM-Verfahren arbeitende optische Vorrichtung ist in DE 102 57 423 A1 beschrieben. Bei diesem Mikroskop wird eine Probe mit einem dünnen Lichtblatt beleuchtet, während die Beobachtung senkrecht zu der Ebene des beleuchtenden Lichtblattes erfolgt. Hierbei erfolgen die Beleuchtung und die Detektion über zwei separate optische Strahlengänge mit jeweils separater Optik, insbesondere mit zwei separaten, zueinander senkrechten Objektiven.

Aus DE 10 2009 044 983 A1 ist ein Mikroskop bekannt, das eine Beleuchtungseinrichtung aufweist, mit der ein Lichtblatt zur Beleuchtung eines Probenbereichs erzeugt wird, welches in Richtung einer Beleuchtungsachse eines Beleuchtungsstrahlenganges und in Richtung einer Querachse, welche quer zur Beleuchtungsachse liegt, annähernd flächig ausgedehnt ist. Das Mikroskop weist außerdem eine Detektierungseinrichtung auf, mit der Licht detektiert wird, welches entlang einer Detektierungsachse eines Detektierungsstrahlengangs aus dem Probenbereich abgestrahlt wird, wobei Beleuchtungsachse und Detektierungsachse sowie Querachse und Detektierungsachse in einem von Null verschiedenen Winkel aufeinander stehen, und wobei die Detektierungseinrichtung außerdem im Detektierungsstrahlengang ein Detektierungsobjektiv umfasst. Bei einem solchen Mikroskop umfasst die Detektierungseinrichtung außerdem ein von einer Frontlinse des Detektierungsobjektivs räumlich getrennt angeordnetes und von dieser unabhängig verstellbares optisches Detektierungselement, mittels dessen die Größe eines Detektierungsbildfeldes stufenlos variierbar ist, und/oder mittels dessen eine Detektierungsfokusebene im Probenbereich stufenlos verschiebbar ist.

Aus Fahrbach, F. O., Voigt, F. F., Schmid, B., Helmchen, F. & Huisken, J. Rapid 3D light-sheet microscopy with a tunable lens. Opt. Express 21, 21010 (2013), ist es bekannt, zur schnellen Abbildung von Volumina, ein Light-sheet entlang der Detektionsachse schnell zu verschieben und die Schärfenebene der Detektionsoptik mit einer durchstimmbaren Linse nachzuführen.

Aus DE 10 2013 205 115 A1 ist eine SPIM-Anordnung mit einer Beleuchtungseinrichtung zur Erzeugung eines eine Probe beleuchtenden Lichtblatts und einer einen Detektor aufweisenden Detektionseinrichtung für von der Probe ausgehendes Detektionslicht bekannt. Die SPIM-Anordnung ist im Hinblick auf eine effiziente und schonende Probenuntersuchung mit konstruktiv einfachen Mitteln derart ausgestaltet und weitergebildet, dass die Detektionseinrichtung eine Einrichtung zur Zuordnung verschiedener Fokusebenen des Lichtblatts zu verschiedenen Regionen des Detektors aufweist. Die Einrichtung kann beispielsweise ein Multi-Focus-Grating oder ein Chromatic-Correction-Grating aufweisen.

Aus der Druckschrift WO 2015/184124 A1 ist ein Lichtblattmikroskop bekannt, das zwei einander diametral gegenüberstehende Beleuchtungsobjektive aufweist, welche die Probe in zwei gegeneinander versetzten Probenebenen beleuchten. Auf entgegengesetzten Seiten der Probe befinden sich zwei Detektoreinheiten, die jeweils aus einem Detektionsobjektiv, einer Tubuslinse und einem daran anschließenden Detektor gebildet sind. Von den beiden beleuchteten Probenebenen wird die eine auf den einen Detektor die andere auf den anderen Detektor abgebildet.

Aus OBER R J ET AL: "Simultaneous Imaging of Different Focal Planes in Fluorescence Microscopy for the Study of Cellular Dynamics in Three Dimensions",IEEE TRANSACTIONS ON NANOBIOSCIENCE, IEEE SERVICE CENTER, PISCATAWAY, NY, US, Bd. 3, Nr. 4, 1. Dezember 2004 (2004-12-01), Seiten 237-242, ist ein Verfahren bekannt, in dem Detektionslicht aus verschiedenen Probenebenen auf einen Flächensensor abgebildet wird.

Es ist daher eine Aufgabe der vorliegenden Erfindung, ein Verfahren anzugeben, das es erlaubt, ein Probenvolumen schnell und mit hoher Auflösung abzubilden.

Die Aufgabe wird durch ein Verfahren gemäß Anspruch 1 gelöst, das dadurch gekennzeichnet ist, dass die Probe gleichzeitig in mehreren, voneinander verschiedenen Probenebenen jeweils entlang einer Linie (Beleuchtungslinie) mit jeweils einem Beleuchtungslichtbündel beleuchtet wird und wobei jeder entlang einer Beleuchtungslinie beleuchtete Probenbereich jeweils mit einer eigenen Detektions-PSF abgetastet und das von den beleuchteten Probenbereichen ausgehende Detektionslicht gleichzeitig und voneinander räumlich separat detektiert wird.

Es ist daher eine weitere Aufgabe der vorliegenden Erfindung, ein Mikroskop anzugeben, das es erlaubt, ein Probenvolumen schnell und mit hohem Bildkontrast und hoher Auflösung abzubilden.

Die weitere Aufgabe wird durch ein Mikroskop gemäß Anspruch 10 gelöst, das gekennzeichnet ist durch eine Beleuchtungsanordnung, die ein Beleuchtungsobjektiv aufweist und die dazu ausgebildet ist, eine Probe gleichzeitig in mehreren, voneinander verschiedenen Probenebenen jeweils entlang einer Beleuchtungslinie mit jeweils einem Beleuchtungslichtbündel zu beleuchten, und durch eine Detektionsanordnung, die ein Detektionsobjektiv und wenigstens einen Detektor aufweist und die dazu ausgebildet ist, dass jeder entlang einer Beleuchtungslinie beleuchtete Probenbereich jeweils mit einer eigenen Detektions-PSF abgetastet wird und das von den beleuchteten Probenbereichen ausgehende Detektionslicht gleichzeitig und voneinander räumlich separat detektiert wird.

Die Erfindung ermöglicht es bei hoher Auflösung simultan aus unterschiedlichen, insbesondere zueinander parallelen Probenebenen, Bilddaten zu erzeugen, um einen 3D-Stapel an Bilddaten zu gewinnen.

Eine Besonderheit der Erfindung liegt darin, die Probe gleichzeitig in mehreren Probenebenen jeweils entlang einer in der jeweiligen Probenebene liegenden Beleuchtungslinie zu beleuchten. Diese Vorgehensweise ermöglicht in besonders vorteilhafter Weise, die Beleuchtungslinien derart relativ zueinander zu versetzen, dass ein Übersprechen des Detektionslichts aus den einzelnen Probenebenen auf die Detektionskanäle der anderen Probenebenen wirkungsvoll vermieden ist.

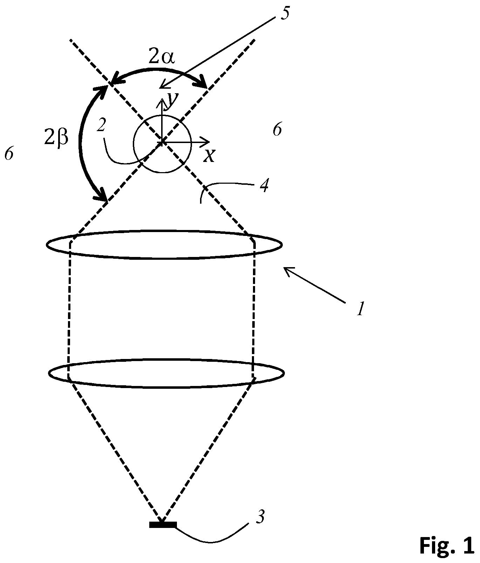

Wie Figur 1 illustriert, bildet ein Detektionsobjektiv 1 den Teil des von einem entlang einer ersten Beleuchtungslinie 2 beleuchteten Probenbereich ausgehenden Detektionslichts auf einen Zeilendetektor 3 ab, der in einem keilförmigen Volumen 4 mit einem von der numerischen Apertur des Objektivs 1 abhängigen Öffnungswinkel 2α propagiert. Bezogen auf Figur 1 steht die erste Beleuchtungslinie senkrecht auf der Papierebene (z-Richtung). Die Ausbildung des Detektionsstrahlenganges und insbesondere des Detektionsobjektivs 1 definiert ein Detektionsvolumen, nämlich eine Detektions-PSF 5 (PSF: Point-Spread-Funktion), wobei das von der Detektions-PSF 5 ausgehende Detektionslicht durch das keilförmigen Volumen 4 hindurch zu dem Detektionsobjektiv 1 gelangt.

Um zu vermeiden, dass das von einem andern Probenbereich, der entlang einer anderen Beleuchtungslinie beleuchtet ist, ausgehende Detektionslicht von dem Detektionsobjektiv 1 auf den Zeilendetektor 3 abgebildet wird, der dem ersten Probenbereich zugeordnet ist, wird die andere Beleuchtungslinie vorzugsweise außerhalb des keilförmigen Volumens 4 mit dem Öffnungswinkel 2α, nämlich in einem der beiden keilförmigen Bereiche 6 mit dem Öffnungswinkel 2β angeordnet. Dies vorzugsweise derart, dass die andere Beleuchtungslinie in einer anderen Probenebene angeordnet ist, was es erlaubt, durch gleichzeitiges seitliches Verschieben der Beleuchtungslinien simultan zwei unterschiedliche Probenebenen abzutasten, ohne dass es zu einem Übersprechen kommt. Natürlich lässt sich dieses an Hand von zwei Beleuchtungslinien erläuterte Prinzip auch mit einer höheren Anzahl von Beleuchtungslinien verwirklichen, wobei jeweils benachbarte Beleuchtungslinien in der genannten Weise versetzt sind.

In vorteilhafter Weise wird ein Übersprechen dadurch vermieden, dass der Abstand zweier benachbarter Beleuchtungslinien größer ist als die Summe von Beleuchtungsbündel-Radius und dem Radius der benachbarten Detektions-PSF in der Ebene des Beleuchtungsbündels. In ganz besonders vorteilhafter Weise wird die Lage der Beleuchtungslinien so gewählt, dass die Beleuchtungsbündel jeweils nicht im Detektionskegel (der Detektions-PSF) anderer Zeilen in andern Ebenen liegen.

Wie bereits erwähnt, erlaubt es die vorliegende Erfindung, mehrere, insbesondere zueinander parallele Probenebenen, simultan jeweils mit mindestens einer Beleuchtungslinie abzutasten, wobei die Beleuchtungslinien, vorzugsweise gleichzeitig, jeweils entlang der Probenebenen (also entlang eines Vektors parallel zu einer Probenebene) verschoben werden. Hierbei kann insbesondere vorgesehen sein, dass die Beleuchtungslinien in einer Richtung entlang der Probenebenen und senkrecht zur Beleuchtungslichtausbreitungsrichtung versetzt zueinander angeordnet sind. Alternativ oder zusätzlich ist es auch möglich, dass die Beleuchtungslinien in Richtung entlang der Probenebenen und senkrecht zur optischen Achse eines Detektionsobjektivs versetzt zueinander angeordnet sind. Wie bereits erläutert, ist es zur Vermeidung eines Übersprechens von besonderem Vorteil, wenn in dem von einem Probenbereich ausgehenden Detektionslichtbündel keine andere der Beleuchtungslinien angeordnet ist.

Ein besonders hoher Bildkontrast kann dadurch erreicht werden, dass bezogen auf jede Beleuchtungslinie jeweils eine konfokale Liniendetektion erfolgt. Dies wird durch Verwendung einer zur Beleuchtungslinie konfokal angeordnete Spaltdetektoranordnung erreicht.

Beispielsweise kann vorteilhaft vorgesehen sein, dass das jeweils von einem entlang einer Beleuchtungslinie beleuchteten Probenbereich ausgehenden Detektionslicht von einem Detektor, insbesondere einem Flächendetektor, detektiert wird, dem eine Spaltblende vorgeschaltet ist. Eine solche Spaltblende kann beispielsweise durch ein optisches Element gebildet sein, bei dem eine einen Spalt freilassende Oberfläche verspiegelt ist. Die Verwendung einer mechanischen Spaltblende ist jedoch insoweit aufwendig, weil beim Verschieben der Beleuchtungslinie gleichzeitig auch ein Verschieben der Spaltdetektoranordnung oder alternativ ein Descannen des Detektionslichts, beispielsweise mittels einer im Detektionsstrahlengang angeordneten, hinsichtlich des Ablenkwinkels einstellbaren Strahlablenkeinrichtung, erfolgen muss, damit das von der bewegten Beleuchtungslinie ausgehende Detektionslicht jeweils die Spaltblende treffen kann. Weitere Details hierzu finden sich insbesondere weiter unten unter Bezugnahme auf die Ausführungsbeispiele.

Insbesondere kann es sich bei der vorgeschalteten Spaltblende um einen mechanischen Verschlussvorhang, wie er in Spiegelreflexkameras Verwendung findet, handeln. Der Flächendetektor kann bei dieser Ausführung bezüglich seiner gesamten Sensorfläche, insbesondere auch während die Spaltblende synchron zu dem entlang der Beleuchtungslinien bewegten Beleuchtungslichtbündel bewegt wird, aktiv sein.

Die Spaltblende kann besonders vorteilhaft auch als nicht-mechanisches Bauteil ausgeführt sein. Beispielsweise kann die Spaltblende als abschnittsweise schaltbarer Spiegel oder als abschnittsweise schaltbarer Absorber, z.B. auf Basis von Flüssigkristallen, ausgebildet sein.

Alternativ ist es auch möglich, dass das jeweils von einem entlang einer Beleuchtungslinie beleuchteten Probenbereich ausgehende Detektionslicht von einem Detektor detektiert wird, der als Spaltdetektor fungiert, wobei der Spaltdetektor durch den jeweils aktiv geschalteten Teil eines Flächendetektors, beispielsweise eines CMOS-Detektors oder sCMOS-Detektors, gebildet ist. Es ist beispielsweise vorteilhaft möglich, lediglich einen Teil des Flächendetektors, nämlich den Teil, der gerade dem Spaltdetektor entspricht, auszulesen (aktiv geschalteter Teil), während die übrigen Teile des Flächendetektors, nämlich die Teile, die außerhalb des Spaltdetektors liegen, nicht ausgelesen werden (nicht aktiv geschalteter Teil). Auf diese Weise ist auch eine konfokale Detektion möglich.

Bei einer solchen Ausführung sind mechanische Bauteile, wie beispielsweise eine zusätzliche mechanische Spaltblende, vermieden, was insbesondere von Vorteil ist, wenn es darum geht, den Spaltdetektor in der Detektionsebene zu verschieben. Bei einer solchen Ausführung kann nämlich der Flächendetektor, insbesondere relativ zum Detektionsobjektiv und/oder zum Beleuchtungsobjektiv und/oder zur Probe und oder relativ zum einfallenden Detektionslicht, ortsfest bleiben, wobei zeitlich nacheinander unterschiedliche Teile der Sensorfläche des Flächendetektors, die dann jeweils den Spaltdetektor bilden, aktiv geschaltet werden; nämlich derart, dass jeweils ausschließlich das auf den aktiv geschalteten Teil fallende Detektionslicht detektiert wird, während Detektionslicht, das auf die jeweils inaktiv geschalteten Teile des Flächendetektors fällt, nicht detektiert wird.

Wenn die jeweils zeitlich unmittelbar nacheinander aktiv geschalteten Teile des Flächendetektors jeweils räumlich unmittelbar nebeneinander liegen, resultiert im Ergebnis eine räumlich ununterbrochener Bewegung des Spaltdetektors, ohne dass hierfür mechanische Bauteile bewegt werden müssen. Konkret kann beispielsweise ein Bereich aktiv geschalteter Pixel gleichförmig und synchron zu einem entlang einer Beleuchtungslinie beleuchtenden Beleuchtungslichtbündel an der Sensorfläche des Flächendetektors entlang laufen. Insoweit hat eine solche Ausführung den besonderen Vorteil einer großen Langlebigkeit, weil ein bewegungsbedingter Verschleiß, beispielsweise von mechanischen Blendenden, vermieden ist.

Bei einer besonderen Ausführung ist jedem beleuchteten Probenbereich ein eigener Detektor zugeordnet. Insbesondere können hierbei die den unterschiedlichen Probenbereichen zugeordneten Detektoren in unterschiedlichen Detektionsebenen angeordnet sein und damit dem Umstand Rechnung tragen, dass die jeweils entlang einer Beleuchtungslinie beleuchteten Probenbereich in unterschiedlichen Probenebenen angeordnet sind.

Alternativ ist es auch möglich, dass jedem beleuchteten Probenbereich ein eigener Detektionsbereich auf einem gemeinsamen Flächendetektor zugeordnet ist. Um zu erreichen, dass bei der Verwendung eines gemeinsamen Flächendetektors das Detektionslicht aller Probenbereiche in dieselbe Detektionsebene, nämlich die Detektionsebene des Flächendetektors, fokussiert wird, können in den unterschiedlichen Detektionsstrahlenggangzweigen unterschiedliche Elemente zur Anpassung des optischen Lichtwegs, beispielsweise unterschiedlich dicke Glasblöcke, und/oder unterschiedliche Fokussierende oder defokussierende Elemente, beispielsweise einstellbare Linsen, angeordnet sein.

Bei einer besonderen Ausführung wird das von der Probe ausgehende Detektionslicht in Abhängigkeit vom Ort seiner Entstehung, also dem Ort des jeweils mit einer Beleuchtungslinie beleuchteten Probenbereichs, mittels wenigstens eines Strahlteilers auf unterschiedliche Detektionsstrahlengangzweige aufgeteilt.

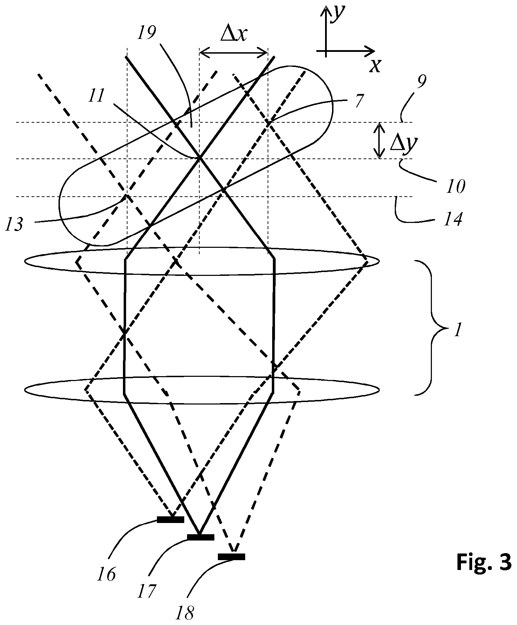

Das anhand der Figur 1 oben erläuterte Prinzip ist auch realisierbar, indem die Probe gleichzeitig wenigstens entlang zweier benachbarter Beleuchtungslinien, statt mit jeweils einem eigenen Beleuchtungslichtbündel, mit einem beide Beleuchtungslichtlinien gleichzeitig beleuchtenden Lichtblatt beleuchtet wird. Hierbei ist die Lichtblattebene vorzugsweise schräg, also in einem von Null Grad verschiedenen Winkel zu den Probenebenen angeordnet. Durch die Schrägstellung des Lichtblattes kann vorteilhaft ein Übersprechen des Detektionslichts der einen Beleuchtungslinie den der anderen Beleuchtungslinie zugeordneten Detektor reduziert werden. Um dies zu erreichen kann vorteilhaft vorgesehen sein, dass der Parallelversatz Δx benachbarter Beleuchtungslinien größer ist, als die Summe von Detektions-PSF-Radius und halber Ausdehnung des Lichtblattes in Richtung der Probenebene senkrecht zur Lichtausbreitungsrichtung, wie dies Figur 3 illustriert.

Das erfindungsgemäße Verfahren kann beispielsweise in der Weise ausgeführt werden, dass das Beleuchtungslicht mittels eines Beleuchtungsobjektivs fokussiert wird und dass das von der Probe ausgehende Detektionslicht ein Detektionsobjektiv durchläuft, wobei die optische Achse des Beleuchtungsobjektivs und die optische Achse des Detektionsobjektivs in zueinander senkrechten Ebenen angeordnet sind.

Bei einer besonders flexibel ausführbaren Ausführungsform, bei der insbesondere eine gute Probenzugänglichkeit ermöglicht ist, sind die optische Achse des Beleuchtungsobjektivs und die optische Achse des Detektionsobjektivs parallel oder koaxial zueinander ausgerichtet. Insbesondere kann dem Beleuchtungsobjektiv ein Umlenkmittel nachgeordnet sein, das das Beleuchtungslicht, nachdem es das Beleuchtungsobjektiv durchlaufen hat, beispielsweise im rechten Winkel, umlenkt. Ein solcher Aufbau ermöglicht außerdem die Verwendung von aufrechten oder inversen Standard-Mikroskopstativen.

Das erfindungsgemäße Mikroskop kann vorteilhaft auf der Basis eines Rastermikroskops, insbesondere auf der Basis eines konfokalen Rastermikroskops, aufgebaut sein. Von besonderem Vorteil ist insoweit die Verwendung eines (möglicherweise in einem Labor ohnehin vorhandenen) Rastermikroskops zur Ausführung des erfindungsgemäßen Verfahrens.

Wie bereits erwähnt, kann vorteilhaft vorgesehen sein, dass die Beleuchtungslichtbündel in den Beleuchtungsebene relativ zur Probe bewegt werden. Hierzu kann beispielsweise eine hinsichtlich des Ablenkwinkels einstellbare Strahlablenkeinrichtung verwendet werden. Eine solche Strahlablenkeinrichtung kann beispielsweise wenigstens einen Galvanometerspiegel aufweisen. Insbesondere kann beispielsweise auch die ohnehin vorhandene Strahlablenkvorrichtung eines Rastermikroskops, insbesondere eines konfokalen Rastermikroskops, verwendet werden; dies insbesondere wenn das erfindungsgemäße Mikroskop durch Umrüstung eines Rastermikroskops hergestellt ist oder das erfindungsgemäße Verfahren mithilfe eines Rastermikroskops ausgeführt wird.

Zur Erzeugung der entlang der Beleuchtungslinien beleuchtenden Beleuchtungslichtbündel sind viele Methoden möglich. Beispielsweise kann ein einfaches Gitter oder ein spezielles diffraktives Element, das genau die gewünschte Zahl der Strahlen erzeugt und das gleichzeitig vorzugsweise auch dafür sorgt, dass alle Beleuchtungslichtbündel gleich hell sind, in einer zur Pupille des Beleuchtungsobjektivs konjugierten Ebene angeordnet sein. Wichtig ist dabei, dass der gewünschte Strahlversatz entlang der Detektionsachse mit einem ausreichenden Versatz in Richtung der Probenebenen verbunden wird. Dies kann bei einem Gitter dadurch erreicht werden, dass die Gitterstruktur in der x-y-Ebene (also um die optische Achse des Beleuchtungsstrahlengangs) gedreht wird. Es ist, alternativ oder zusätzlich, auch eine Aufspaltung über die Polarisation mit Hilfe von doppelbrechenden Materialien oder durch Verwendung von akustooptischen Bauteilen möglich. Das Gitter kann z.B. auch flexibel durch einen SLM (Spatial Light Modulator) realisiert sein.

Des Weiteren ist es auch möglich, bei Einsatz mehrerer Fluorophore in der Probe in unterschiedlichen Probenebenen unterschiedliche Fluorophore, beispielsweise mit verschiedenen Laserlinien, anzuregen. In der Folge kann dann eine Trennung im Detektionsstrahlengang mit Hilfe von chromatischen Filtern, insbesondere chromatischen Bandpassfiltern, und/oder mit Hilfe von chromatischen Strahlteilern erfolgen.

Das erfindungsgemäße Mikroskop kann vorteilhaft eine, insbesondere elektronische und/oder computerbasierte, Steuerungsvorrichtung aufweisen, die die Bewegung des entlang der Beleuchtungslinien beleuchtenden Beleuchtungslichts und/oder die Bewegung der Spaltdetektoren oder einer descannenden Strahlablenkeinrichtung synchron steuert.

In der Zeichnung ist der Erfindungsgegenstand beispielhaft und schematisch dargestellt und wird anhand der Figuren nachfolgend beschrieben, wobei gleiche oder gleich wirkende Elemente zumeist mit denselben Bezugszeichen versehen sind. Dabei zeigen:
- Fig. 1: eine schematische Darstellung eines Detektionsstrahlengangs zur Erläuterung der Zusammenhänge bei der Detektion,
- Fig. 2: eine schematische Darstellung der Beleuchtung und des Detektionsstrahlengangs eines ersten Ausführungsbeispiels eines erfindungsgemäßen Mikroskops,
- Fig. 3: eine schematische Darstellung der Beleuchtung und des Detektionsstrahlengangs eines zweiten Ausführungsbeispiels eines erfindungsgemäßen Mikroskops,
- Fig. 4: eine schematische Darstellung der Beleuchtung und des Detektionsstrahlengangs eines dritten Ausführungsbeispiels eines Mikroskops, welches nicht unter die Begriffe der Ansprüche fällt.
- Fig.5: eine schematische Darstellung der Beleuchtung und des Detektionsstrahlengangs eines vierten Ausführungsbeispiels eines erfindungsgemäßen Mikroskops
- Fig.6: eine schematische Darstellung der Beleuchtung und des Detektionsstrahlengangs eines fünften Ausführungsbeispiels eines erfindungsgemäßen Mikroskops,
- Fig.7: eine schematische Darstellung der Beleuchtung und des Detektionsstrahlengangs eines sechsten Ausführungsbeispiels eines Mikroskops, welches nicht unter die Begriffe der Ansprüche fällt, und
- Fig. 8: schematisch ein Beispiel einer Anordnung zum Erzeugen mehrerer Beleuchtungslichtbündel zum simultanen Beleuchten entlang mehrerer versetzter Beleuchtungslichtlinien.

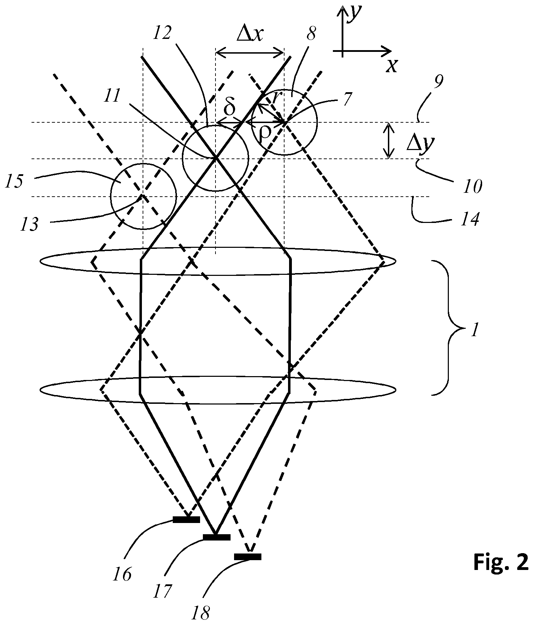

Fig. 2 zeigt eine schematische Darstellung der Beleuchtung und des Detektionsstrahlengangs eines ersten Ausführungsbeispiels eines erfindungsgemäßen Mikroskops. Bei diesem Ausführungsbeispiel wird eine Probe entlang einer ersten Beleuchtungslinie 7, die senkrecht auf der Zeichenebene steht, mittels eines ersten Beleuchtungslichtbündels 8, das sich entlang der erste Beleuchtungslinie 7 ausbreitet, beleuchtet. Das erste Beleuchtungslichtbündel 8 weist einen Beleuchtungslichtbündel-Radius ρ auf. Die erste Beleuchtungslinie 7 befindet sich in seiner ersten Probenebene 9.

In einer zweiten Probenebene 10, die parallel zur ersten Probenebene 9 angeordnet ist, wird die Probe entlang einer zweiten Beleuchtungslinie 11 mittels eines zweiten Beleuchtungslichtbündels 12, das sich entlang der zweiten Beleuchtungslinie 11 ausbreitet, beleuchtet. Die zweite Beleuchtungslinie 11 ist parallel zur ersten Beleuchtungslinie 7 angeordnet. Die zweite Beleuchtungslinie 11 ist um den Betrag Δx senkrecht zur optischen Achse eines Detektionsobjektivs 1 versetzt angeordnet, wobei die erste Probenebene 9 und die zweite Probenebene 10 einen Abstand Δy zueinander aufweisen.

Darüber hinaus wird die Probe entlang einer dritten Beleuchtungslinie 13 in einer dritten Probenebene 14 mittels eines dritten Beleuchtungslichtbündels 15 beleuchtet.

Das von dem mittels des ersten Beleuchtungslichtbündels 8 beleuchteten Probenbereich ausgehende Detektionslicht wird über eine Detektionsobjektiv 1 (bzw. eine Detektionsoptik) auf einen ersten Zeilendetektor 16 abgebildet. Das von dem mittels des zweiten Beleuchtungslichtbündels 12 beleuchteten Probenbereich ausgehende Detektionslicht wird auf einen zweiten Zeilendetektor 17 abgebildet. Das von dem mittels des dritten Beleuchtungslichtbündels 15 beleuchteten Probenbereich ausgehende Detektionslicht wird auf einen dritten Zeilendetektor 18 abgebildet. Die Zeilendetektoren 16, 17 und 18 befinden sich in unterschiedlichen Detektionsebenen, die zu den jeweiligen Beleuchtungsebenen konjugiert sind. In dem dargestellten Ausführungsbeispiel erfolgt eine Beleuchtung exemplarisch mit drei Beleuchtungslichtbündeln 8, 12, 15 und eine Detektion mit drei Zeilendetektoren 16, 17, 18. Prinzipiell gibt es jedoch keine Grenze der Zahl der verwendbaren Beleuchtungslichtbündel und der beleuchteten Probenebenen. Insoweit ist es auch möglich, die Probe geleichzeitig mit einer noch höheren Anzahl von Beleuchtungslichtbündeln in einer noch höheren Anzahl von Probenebenen zu beleuchten.

Der Versatz Δx benachbarter Beleuchtungslinien in x-Richtung ist so gewählt, dass gilt: Δx > δ + ρ. Hierbei ist die Größe δ der Radius der Detektions-PSF in der jeweiligen Probenebene 9, 10, 14 (grob δ = Δy·tan(α), wobei α = arcsin(NA/n) der objektseitige Öffnungswinkel, NA die numerische Apertur und n der Brechungsindex ist) und ρ die Strecke, die sich über die Formel ρ = r/cos(α) aus dem Radius r des jeweilig benachbarten Beleuchtungslichtbündels ergibt. Die von den drei Beleuchtungslichtbündeln 8, 12, 15 beleuchteten Probenbereiche werden auf Grund der gewählten Geometrie scharf auf die Detektoren in entsprechenden Bildebenen abgebildet, wobei ein Übersprechen auf die jeweils anderen Detektoren vermieden ist.

Der Versatz Δy benachbarter Beleuchtungslinien in y-Richtung wird beispielsweise so gewählt, dass die Summe der Radien r der entsprechenden Beleuchtungslichtbündel größer ist als Δy. (Dies ist in Figur 2 nicht gezeigt.)

Figur 3 zeigt eine schematische Darstellung der Beleuchtung und des Detektionsstrahlengangs eines zweiten Ausführungsbeispiels, bei dem im Gegensatz zu dem in Figur 2 dargestellten Beispiel eine Beleuchtung der Beleuchtungslinien 7, 11, 13 nicht mit einzelnen, räumlich separaten Beleuchtungslichtbündeln 8, 12, 15, sondern vielmehr mit einem schräg gestellten Lichtblatt 19 erfolgt. Das Lichtblatt 19 propagiert in Richtung der Beleuchtungslinien 7, 11, 13 (also senkrecht zur Zeichenebne). Durch die Schrägstellung der Lichtblattebene des Lichtblatts 19 relativ zu den Probenebenen 9, 10, 14 ist eine Beleuchtung entlang der in unterschiedlichen Beleuchtungsebenen 9, 10, 14 angeordneten Beleuchtungslinien 7, 11, 13 möglich, wobei durch die Verwendung von Zeilendetektoren ebenfalls ein Übersprechen, zumindest bis zu einem gewissen Grad, vermieden wird. Diese Ausführung ist optisch nicht ganz so hochwertig, wie die in Figur 2 dargestellte Ausführung, weil sich ein Übersprechen nur in einem geringeren Maße vermeiden lässt, was im Wesentlichen auf die zwangsläufig größere Dicke des Lichtblattes 19 zurückzuführen ist.

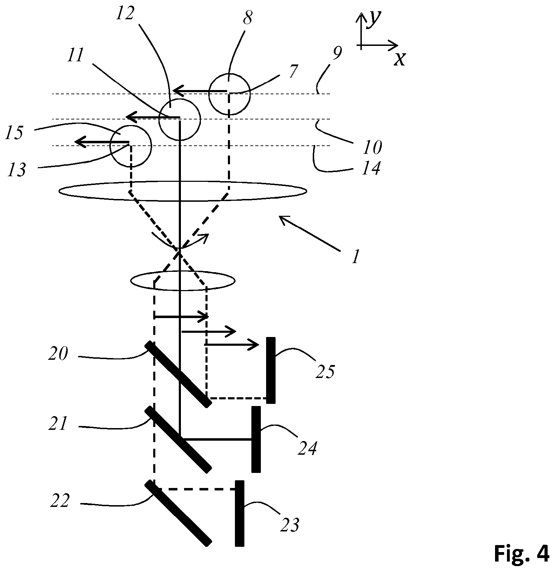

Figur 4 zeigt eine schematische Darstellung der Beleuchtung und des Detektionsstrahlengangs eines dritten Ausführungsbeispiels eines Mikroskops, welches nicht unter die Begriffe der Ansprüche fällt. Das Beleuchtungslichtbündel 8, das einen Probenbereich entlang einer Beleuchtungslinie 7 in einer ersten Probenebene beleuchtet, das zweite Beleuchtungslichtbündel 12, das einen zweiten Probenbereich entlang einer zweiten Beleuchtungslinie 11 in einer zweiten Probenebene 10 beleuchtet, und das dritte Beleuchtungslichtbündel 15, das einen dritten Probenbereich entlang einer dritten Beleuchtungslinie 13 in einer dritten Probenebene 14 beleuchtet, werden gleichzeitig entlang der Probenebenen 9, 10, 14 verschoben, um jede der Probenebenen 9, 10, 14 sukzessive abzutasten und um im Ergebnis einen 3D-Stapel von Daten der Probe zu erzeugen.

Der Detektionsstrahlengang weist einen Umlenkspiegel 22 auf, mittels dem das von dem ersten, mittels des ersten Beleuchtungslichtbündels 8 beleuchteten, Probenbereich ausgehende Detektionslicht auf einen ersten Flächendetektor 23 gelenkt wird. Der Detektionsstrahlengang weist darüber hinaus einen ersten Strahlteiler 21 auf, der das von dem mittels des zweiten Beleuchtungslichtbündels 12 beleuchteten Probenbereich ausgehende Detektionslicht auf einen zweiten Flächendetektor 24 umlenkt. Der Detektionsstrahlengang beinhaltet außerdem einen zweiten Strahlteiler 20, der das von dem mit dem dritten Beleuchtungslichtbündel 15 beleuchteten Probenbereich ausgehende Detektionslicht zu einem dritten Flächendetektor 25 umlenkt.

Die Flächendetektoren 23, 24, 25 sind derart angeordnet, dass es jeweils zu einer scharfen Abbildung der beleuchteten Probenbereiche kommt. Bei der Detektion wandern die Foki der jeweiligen Detektionsteillichtbündel entsprechend der Bewegung der Beleuchtungslichtbündel 8, 10, 15 auf der Oberfläche der Flächendetektoren 23, 24, 25 entlang. Hierbei kann vorteilhaft vorgesehen sein, dass jeweils nur ein schmaler Streifen jedes Flächendetektors 23, 24, 25 aktiv geschaltet wird, während die Nachbarbereiche jeweils inaktiv geschaltet sind. Auf diese Weise ist jeweils ein Spaltdetektor realisiert, der eine konfokale Detektion erlaubt.

Durch Beschalten der Flächendetektoren 23, 24, 25 synchron zur Bewegung der Beleuchtungslichtbündel 8, 12, 15 kann ein Mitbewegen des jeweils aktiv geschalteten Teils des jeweiligen Flächendetektors 23, 24, 25 und damit eine Art "rolling-shutter" also eine sich synchron zur Bewegung der Beleuchtungslichtbündel 8, 12, 15 mitbewegende Spaltdetektoranordnung realisiert werden. Eine besonders vorteilhafte Unterklasse dieser Methode besteht darin, in unterschiedlichen Probenebenen unterschiedliche Fluorophore, beispielsweise mit verschiedenen Laserlinien, anzuregen. In der Folge kann dann eine Trennung im Detektionsstrahlengang mit Hilfe von chromatischen Filtern, insbesondere chromatischen Bandpassfiltern, und/oder mit Hilfe von chromatischen Strahlteilern erfolgen.

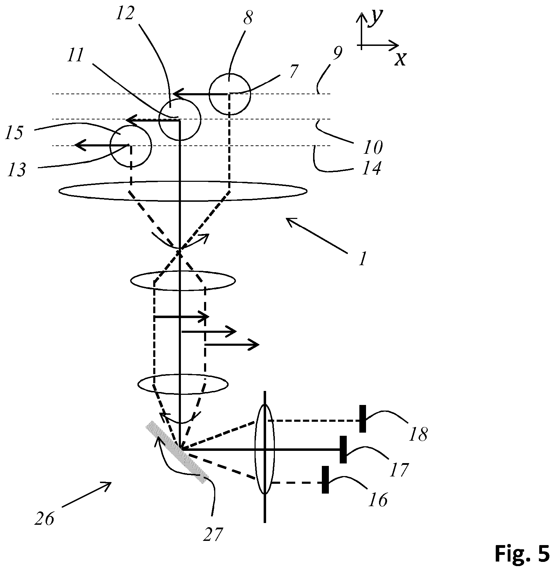

Figur 5 zeigt eine schematische Darstellung der Beleuchtung und des Detektionsstrahlengangs eines vierten Ausführungsbeispiels. Bei diesem Ausführungsbeispiel ist im Detektionsstrahlengang eine hinsichtlich des Ablenkwinkels einstellbare Strahlablenkeinrichtung 26, die einen mittels eines Galvanometerantriebs drehbar gelagerten Spiegel 27 beinhaltet. Die Strahlablenkeinrichtung ist synchron zur Bewegung der Beleuchtungslichtbündel 8, 10, 12 derart gesteuert, dass die Foki des Detektionslichts, anders als bei der in Figur 4 dargestellten Ausführung, nicht auf der Oberfläche der Zeilendetektoren 16, 17, 18 wandern, sondern vielmehr ortsfest bleiben. Eine solche Ausführung hat den besonderen Vorteil, dass insbesondere auch feststehende mechanische Blenden verwendet werden können.

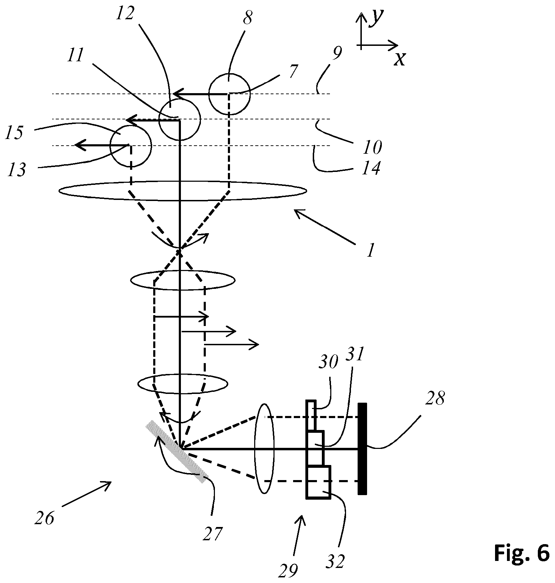

Figur 6 zeigt eine schematische Darstellung der Beleuchtung und des Detektionsstrahlengangs eines fünften Ausführungsbeispiels eines erfindungsgemäßen Mikroskops. Im Gegensatz zu der in Figur 5 dargestellten Ausführung ist ein einziger Flächendetektor 28 vorhanden, wobei jedem beleuchteten Probenbereich ein eigener Detektionsbereich auf dem gemeinsamen Flächendetektor 28 zugeordnet ist. Um zu gewährleisten, dass sämtliche Detektionslichtbündel scharf auf dem Flächendetektor 28 abgebildet sind, ist in jedem der Teildetektionsstrahlengänge ein Mittel 29 zur Beeinflussung der optischen Weglänge angeordnet. Hierbei handelt es sich um einen ersten dünneren Glasblock 30, einen zweiten etwas dickeren Glasblock 31 und einen dritten noch dickeren Glasblock 32. Die Glasblöcke können zur Vermeidung von Aberrationen, insbesondere sphärischer Aberrationen, einen entsprechend geformte Oberfläche aufweisen.

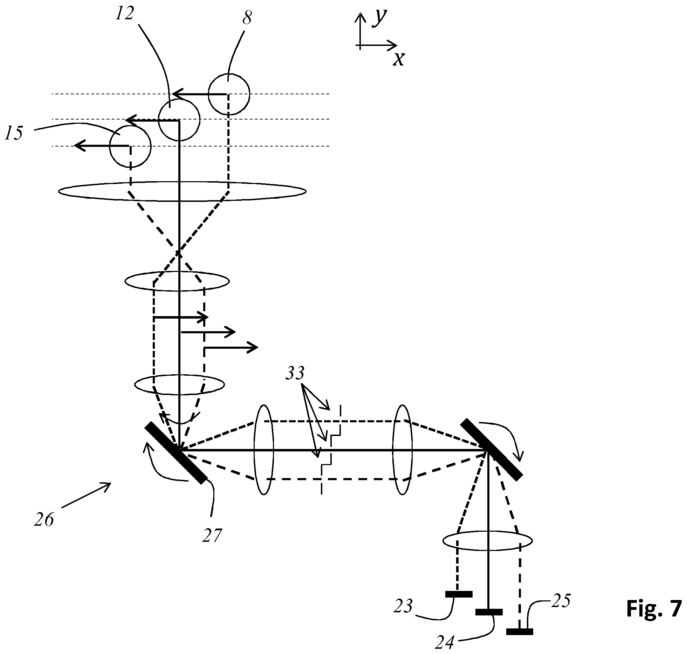

Figur 7 zeigt eine schematische Darstellung der Beleuchtung und des Strahlengangs eines sechsten Ausführungsbeispiels eines Mikroskops, welches nicht unter die Begriffe der Ansprüche fällt. Dieses Ausführungsbeispiel beinhaltet im Detektionsstrahlengang eine weitere, hinsichtlich des Ablenkwinkels einstellbare Strahlablenkeinrichtung, um die durch konfokale Blenden 33 gefilterten Streifenbilder synchron zur Bewegung der Beleuchtungslichtbündel 8, 12, 15 wieder zu scannen, wodurch mit jeweils einem Flächendetektor 23, 24, 25, ohne dass ein räumlich fortlaufendes Aktivschalten nötig ist, direkt konfokale Bilddaten der einzelnen Probenebenen aufgenommen werden können.

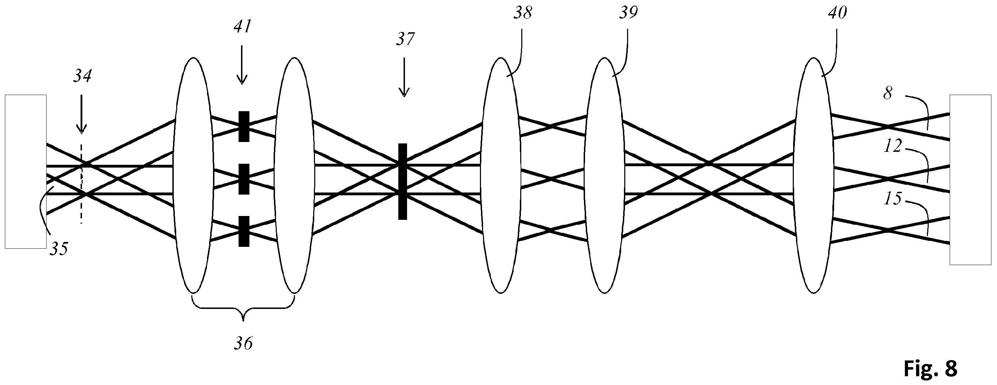

Figur 8 zeigt schematisch ein Beispiel einer Anordnung zum Erzeugen mehrerer Beleuchtungslichtbündel 8, 12, 15 zum simultanen Beleuchten entlang mehrerer versetzter Beleuchtungslinien. Die Anordnung weist ein Gitter 34 auf, das ein primäres Beleuchtungslichtbündel 35, das insbesondere von einer Laserlichtquelle erzeugt sein kann, räumlich aufspaltet. Beleuchtungslichtbündel 8, 12, 15 durchlaufen anschließend eine Teleskopanordnung 36, die zusätzlich auch einen Filter 41 beinhalten kann. Anschließend folgt eine hinsichtlich des Ablenkwinkels einstellbare Strahlablenkeinrichtung 37, um die Beleuchtungslichtbündel 8, 12, 15 jeweils in ihren Probenebenen bewegen zu können. Die von der Strahlablenkeinrichtung 37 kommenden Beleuchtungslichtbündel 8, 12, 15 passieren eine Scanlinse 38, eines Tubuslinse 39 und gelangen schließlich zum Beleuchtungsobjektiv 40. Nach dem Passieren des Beleuchtungsobjektivs 40 gelangen die Beleuchtungslichtbündel 8, 12, 15 direkt oder nach einer erneuten Umlenkung zur (hier nicht dargestellten) Probe.

### Bezugszeichenliste:

- 1: Objektiv
- 2: Beleuchtungslinie
- 3: Zeilendetektor
- 4: keilförmiges Volumen
- 5: Detektions-PSF
- 6: keilförmige Bereiche
- 7: erste Beleuchtungslinie
- 8: erstes Beleuchtungslichtbündel
- 9: erste Probenebene
- 10: zweite Probenebene
- 11: zweite Beleuchtungslinie
- 12: zweites Beleuchtungslichtbündel
- 13: dritte Beleuchtungslinie
- 14: dritte Probenebene
- 15: drittes Beleuchtungslichtbündel
- 16: erster Zeilendetektor
- 17: zweiter Zeilendetektor
- 18: dritter Zeilendetektor
- 19: Lichtblatt
- 20: Zweiter Strahlteiler
- 21: Erster Strahlteiler
- 22: Umlenkspiegel
- 23: erster Flächendetektor
- 24: zweiter Flächendetektor
- 25: dritter Flächendetektor
- 26: Strahlablenkeinrichtung
- 27: drehbar gelagerter Spiegel
- 28: Flächendetektor
- 29: Mittel zur Beeinflussung der optischen Weglänge
- 30: Erster Glasblock
- 31: Zweiter Glasblock
- 32: Dritter Glasblock
- 33: konfokale Blenden
- 34: Gitter
- 35: primäres Beleuchtungslichtbündel
- 36: Teleskopanordnung
- 37: Strahlablenkeinrichtung
- 38: Scanlinse
- 39: Tubuslinse
- 40: Beleuchtungsobjektiv
- 41: Filter

## Patentansprüche

1. Verfahren zum Untersuchen einer Probe, wobei die Probe gleichzeitig in mehreren, voneinander verschiedenen Probenebenen (9, 10, 14) jeweils entlang einer Beleuchtungslinie (7, 11, 13) mit jeweils einem Beleuchtungslichtbündel (8, 12, 15) beleuchtet wird und wobei jeder entlang einer Beleuchtungslinie (7, 11, 13) beleuchtete Probenbereich unter Verwendung ein- und desselben Detektionsobjektivs (1) jeweils mit einer eigenen Detektions-PSF abgetastet und das von den beleuchteten Probenbereichen ausgehende Detektionslicht gleichzeitig und voneinander räumlich separat detektiert wird, und wobei entweder
das von den beleuchteten Probenbereichen ausgehende Detektionslicht mithilfe von Zeilendetektoren (16, 17, 18) detektiert wird, die sich in unterschiedlichen Detektionsebenen befinden, die zu den jeweiligen Beleuchtungsebenen konjugiert sind; oder
wobei das von den beleuchteten Probenbereichen ausgehende Detektionslicht mithilfe eines Flächendetektors (28) detektiert wird, wobei jedem beleuchteten Probenbereich ein eigener Detektionsbereich auf dem Flächendetektor (28) zugeordnet ist, und wobei in jedem Teildetektionsstrahlengang ein Mittel (29) zur Beeinflussung der optischen Weglänge angeordnet ist.

2. Verfahren nach Anspruch 1, **dadurch gekennzeichnet, dass** Probenebenen (9, 10, 14) parallel zueinander ausgerichtet sind.

3. Verfahren nach Anspruch 1 oder 2, **dadurch gekennzeichnet, dass**
a. die Beleuchtungslinien (7, 11, 13) in einer Richtung entlang der Probenebenen (9, 10, 14) und senkrecht zur Beleuchtungslichtausbreitungsrichtung der Beleuchtungslichtbündel (8, 12,15) versetzt zueinander angeordnet sind, und/oder dass
b. die Beleuchtungslinien (7, 11, 13) in einer Richtung entlang der Probenebenen (9, 10, 14) und senkrecht zur optischen Achse des Detektionsobjektivs (1) versetzt zueinander angeordnet sind, und/oder dass
c. das in dem von einem mit einer Beleuchtungslinie (7, 11, 13) beleuchteten Probenbereich ausgehenden Detektionslichtbündel keine andere der Beleuchtungslinien (7, 11, 13) angeordnet ist.

4. Verfahren nach einem der Ansprüche 1 bis 3, **dadurch gekennzeichnet, dass** jede der Probenebenen (9, 10, 14) sukzessive durch synchrones Verschieben, 30 insbesondere Parallelverschieben, des jeweiligen Beleuchtungslichtbündels (8,12, 15) und der jeweiligen Detektions-PSF abgetastet wird.

5. Verfahren nach einem der Ansprüche 1 bis 4, **dadurch gekennzeichnet, dass**
a. eine konfokale Liniendetektion erfolgt und/oder dass
b. das jeweils von einem entlang einer Beleuchtungslinie (7, 11, 13) beleuchteten Probenbereich ausgehende Detektionslicht von einem Detektor detektiert wird, dem eine Spaltblende vorgeschaltet ist, und/oder
dass
c. das jeweils von einem entlang einer Beleuchtungslinie (7, 11, 13) beleuchteten Probenbereich ausgehende Detektionslicht von einem Detektor detektiert wird, der als Spaltdetektor fungiert, wobei der Spaltdetektor durch den jeweils aktiv geschalteten Teil eines Flächendetektors gebildet ist.

6. Verfahren nach einem der Ansprüche 1 bis 5, **dadurch gekennzeichnet, dass** jedem beleuchteten Probenbereich ein eigener Detektor zugeordnet ist oder dass jedem beleuchteten Probenbereich ein eigener Detektionsbereich auf einem gemeinsamen Flächendetektor zugeordnet ist.

7. Verfahren nach einem der Ansprüche 1 bis 6, **dadurch gekennzeichnet, dass** das von der Probe ausgehende Detektionslicht in Abhängigkeit vom Ort seiner Entstehung mittels wenigstens eines Strahlteilers (20, 21) auf unterschiedliche Detektionsstrahlengangzweige aufgeteilt wird.

8. Verfahren nach einem der Ansprüche 1 bis 7, **dadurch gekennzeichnet, dass**
a. die Probe gleichzeitig wenigstens entlang zweier benachbarter Beleuchtungslinien (7, 11, 13) anstatt mit jeweils einem eigenen Beleuchtungslichtbündel (8, 12, 15) mit einem Lichtblatt (19) beleuchtet wird, und/oder dass
b. die Probe gleichzeitig wenigstens entlang zweier benachbarter Beleuchtungslinien (7, 11, 13) anstatt mit jeweils einem eigenen Beleuchtungslichtbündel (8, 12, 15) mit einem Lichtblatt (19) beleuchtet wird, wobei der Abstand der Beleuchtungslinien (7, 11, 13) größer ist, als die Summe von Detektions-PSF-Radius (δ) und halben Ausdehnung des Lichtblattes in Richtung der Probenebene senkrecht zur Lichtausbreitungsrichtung.

9. Verfahren nach einem der Ansprüche 1 bis 8, **dadurch gekennzeichnet, dass**
a. das Beleuchtungslicht mittels eines Beleuchtungsobjektivs (40) fokussiert wird und dass das von der Probe ausgehende Detektionslicht das Detektionsobjektiv (1) durchläuft, wobei die optische Achse des Beleuchtungsobjektivs (40) und die optische Achse des Detektionsobjektivs (1) in zueinander senkrechten Ebenen angeordnet sind, oder dass
b. das Beleuchtungslicht mittels eines Beleuchtungsobjektivs (40) fokussiert wird und dass das von der Probe ausgehende Detektionslicht das Detektionsobjektiv (1) durchläuft, wobei die optische Achse des Beleuchtungsobjektivs (40) und die optische Achse des Detektionsobjektivs (1) parallel oder koaxial zueinander ausgerichtet sind.

10. Mikroskop zum Ausführen eines Verfahren nach einem der Ansprüche 1 bis 9, **gekennzeichnet durch** eine Beleuchtungsanordnung, die ein Beleuchtungsobjektiv (40) aufweist und die dazu ausgebildet ist, eine Probe gleichzeitig in mehreren, voneinander verschiedenen Probenebenen (9, 10, 14) jeweils entlang einer Beleuchtungslinie (7, 11, 13) mit jeweils einem Beleuchtungslichtbündel (8, 12, 15) zu beleuchten, und **gekennzeichnet durch** eine Detektionsanordnung, die ein Detektionsobjektiv (1) und wenigstens einen Detektor aufweist und die dazu ausgebildet ist, dass jeder entlang einer Beleuchtungslinie (7, 11, 13) beleuchtete Probenbereich unter Verwendung des Detektionsobjektivs (1) jeweils mit einer eigenen Detektions-PSF abgetastet wird und das von den beleuchteten Probenbereichen ausgehende Detektionslicht gleichzeitig und voneinander räumlich separat detektiert wird,
wobei entweder das Mikroskop Zeilendetektoren (16, 17, 18) umfasst, die ausgebildet sind, das von den beleuchteten Probenbereichen ausgehende Detektionslicht zu detektieren und die sich in unterschiedlichen Detektionsebenen befinden, die zu den jeweiligen Beleuchtungsebenen konjugiert sind; oder
wobei das Mikroskop einen Flächendetektor (28) umfasst, der ausgebildet ist, das von den beleuchteten Probenbereichen ausgehende Detektionslicht zu detektieren, wobei jedem beleuchteten Probenbereich ein eigener Detektionsbereich auf dem Flächendetektor (28) zugeordnet ist, und wobei in jedem Teildetektionsstrahlengang ein Mittel (29) zur Beeinflussung der optischen Weglänge angeordnet ist.

11. Mikroskop nach Anspruch 10, **dadurch gekennzeichnet, dass** Probenebenen (9, 10, 14) parallel zueinander ausgerichtet sind.

12. Mikroskop nach Anspruch 10 oder 11, **dadurch gekennzeichnet, dass**
a. Beleuchtungslinien in einer Richtung entlang der Probenebenen (9, 10, 14) und senkrecht zur Beleuchtungslichtausbreitungsrichtung der Beleuchtungslichtbündel (8, 12, 15) versetzt zueinander angeordnet sind, und/oder dass
b. die Beleuchtungslinien (7, 11, 13) in einer Richtung entlang der Probenebenen (9, 10, 14) und senkrecht zur optischen Achse des Detektionsobjektivs (1) versetzt zueinander angeordnet sind, und/oder dass
c. das in dem von einem mit einer Beleuchtungslinie (7, 11, 13) beleuchteten Probenbereich ausgehenden Detektionslichtbündel keine andere der Beleuchtungslinien (7, 11, 13) angeordnet ist.

13. Mikroskop nach einem der Ansprüche 10 bis 12, **dadurch gekennzeichnet, dass**
a. die Beleuchtungsanordnung eine hinsichtlich des Ablenkwinkels einstellbare Strahlablenkeinrichtung (26) aufweist, mittels der die Beleuchtungslichtbündel (8, 12, 15) parallel verschiebbar sind, und/oder dass
b. die Detektionsanordnung eine hinsichtlich des Ablenkwinkels einstellbare Strahlablenkeinrichtung (26) aufweist, die ein Descannen des Detektionslichts bewirkt.

14. Mikroskop nach einem der Ansprüche 10 bis 13, **dadurch gekennzeichnet, dass** jedem beleuchteten Probenbereich ein eigener Detektor zugeordnet ist oder dass jedem beleuchteten Probenbereich ein eigener Detektionsbereich auf einem gemeinsamen Flächendetektors zugeordnet ist.

15. Mikroskop nach einem der Ansprüche 10 bis 14, **dadurch gekennzeichnet, dass**
a. eine konfokale Liniendetektion erfolgt und/oder dass
b. das jeweils von einem entlang einer Beleuchtungslinie (7, 11, 13) beleuchteten Probenbereich ausgehende Detektionslicht von einem Detektor detektiert wird, dem eine Spaltblende vorgeschaltet ist, und/oder dass
c. das jeweils von einem entlang einer Beleuchtungslinie (7, 11, 13) beleuchteten Probenbereich ausgehende Detektionslicht von einem Detektor detektiert wird, der als Spaltdetektor fungiert, wobei der Spaltdetektor durch den jeweils aktiv geschalteten Teil eines Flächendetektors ist.

16. Mikroskop nach einem der Ansprüche 10 bis 15, **dadurch gekennzeichnet, dass** die Detektionsanordnung wenigstens einen Strahlteiler (20, 21) aufweist, der das von der Probe ausgehende Detektionslicht in Abhängigkeit vom Ort seiner Entstehung auf unterschiedliche Detektionsstrahlengangzweige aufgeteilt.

17. Mikroskop nach einem der Ansprüche 10 bis 16, **dadurch gekennzeichnet, dass**
a. die Beleuchtungsanordnung ein Lichtblatt (19) erzeugt, das statt einer Beleuchtung mit jeweils einem eigenen Beleuchtungslichtbündel (8, 12, 15) die zu untersuchende Probe gleichzeitig entlang wenigstens zweier benachbarter Beleuchtungslinien (7, 11, 13) beleuchtet, und/oder dass
b. die Beleuchtungsanordnung ein Lichtblatt (19) erzeugt, das statt einer Beleuchtung mit jeweils einem eigenen Beleuchtungslichtbündel (8, 12, 15) 5 die zu untersuchende Probe gleichzeitig entlang wenigstens zweier benachbarter Beleuchtungslinien (7, 11, 13) beleuchtet, wobei der Abstand der Beleuchtungslinien (7, 11, 13) größer ist, als die Summe von Detektions-PSF-Radius und halben Ausdehnung des Lichtblattes in Richtung der Probenebene (9, 10, 14) senkrecht zur Lichtausbreitungsrichtung.

18. Mikroskop nach einem der Ansprüche 10 bis 17, **dadurch gekennzeichnet, dass**
a. die optische Achse des Beleuchtungsobjektivs (40) und die optische Achse des Detektionsobjektiv (1) in zueinander senkrechten Ebenen angeordnet sind, oder dass
b. die optische Achse des Beleuchtungsobjektivs (40) und die optische Achse des Detektionsobjektivs (1) parallel oder koaxial zueinander ausgerichtet sind.

## Claims

1. A method for examining a sample, wherein the sample is illuminated simultaneously in several different sample planes (9, 10, 14) each along an illumination line (7, 11, 13) with an illumination light beam (8, 12, 15) and wherein each sample region, illuminated along an illumination line (7, 11, 13), is scanned using one and the same detection objective (1) each with its own detection PSF and the detection light, emanating from the illuminated sample regions, is detected simultaneously and spatially separately from one another, and wherein either the detection light, emanating from the illuminated sample regions, is detected using line detectors (16, 17, 18) that are located in different detection planes that are conjugated to the respective illumination planes; or wherein the detection light, emanating from the illuminated sample areas, is detected by means of a surface detector (28), wherein each illuminated sample area is assigned its own detection area on the surface detector (28), and wherein a means (29) for influencing the optical path length is disposed in each partial detection beam path.

2. The method according to claim 1, **characterized in that** sample planes (9, 10, 14) are aligned parallel to one other.

3. The method according to claim 1 or 2, **characterized in that**
a. the illumination lines (7, 11, 13) are disposed offset from one another in a direction along the sample planes (9, 10, 14) and perpendicular to the illumination light propagation direction of the illumination light beams (8, 12, 15), and/or that
b. the illumination lines (7, 11, 13) are disposed offset from one another in a direction along the sample planes (9, 10, 14) and perpendicular to the optical axis of the detection objective (1), and/or that
c. none of the other illumination lines (7, 11, 13) is disposed in the detection light beam, emanating from a sample region, illuminated with an illumination line (7, 11, 13).

4. The method according to any one of claims 1 to 3, **characterized in that** each of the sample planes (9, 10, 14) is scanned successively by synchronous shifting, in particular parallel shifting, of the respective illumination light beam (8, 12, 15) and the respective detection PSF.

5. The method according to any one of claims 1 to 4, **characterized in that**
a. a confocal line detection takes place and/or that
b. the detection light, emanating from a sample region, illuminated along an illumination line (7, 11, 13), is detected by a detector, upstream of which a slit diaphragm is disposed, and/or that
c. the detection light, emanating from a sample region, illuminated along an illumination line (7, 11, 13), is detected by a detector which functions as a slit detector, wherein the slit detector is formed by the respective actively switched part of a surface detector.

6. The method according to any one of claims 1 to 5, **characterized in that** each illuminated sample area is assigned its own detector or that each illuminated sample area is assigned its own detection area on a common surface detector.

7. The method according to any one of claims 1 to 6, **characterized in that** the detection light, emanating from the sample, is divided into different detection beam path branches using at least one beam splitter (20, 21) depending on the location of its origin.

8. The method according to any one of claims 1 to 7, **characterized in that**
a. the sample is simultaneously illuminated with a light sheet (19) along at least two adjacent illumination lines (7, 11, 13) instead of with a separate illumination light beam (8, 12, 15) each, and/or that
b. the sample is simultaneously illuminated with a light sheet (19) along at least two adjacent illumination lines (7, 11, 13) instead of with a separate illumination light beam (8, 12, 15) each, wherein the distance between the illumination lines (7, 11, 13) is greater than the sum of the detection PSF radius (δ) and half the extent of the light sheet in the direction of the sample plane perpendicular to the direction of light propagation.

9. The method according to any one of claims 1 to 8, **characterized in that**
a. the illumination light is focused by means of an illumination objective (40) and that the detection light, emanating from the sample, passes through the detection objective (1), wherein the optical axis of the illumination objective (40) and the optical axis of the detection objective (1) are disposed in planes perpendicular to one another, or that
b. the illumination light is focused by means of an illumination objective (40) and that the detection light, emanating from the sample, passes through the detection objective (1), wherein the optical axis of the illumination objective (40) and the optical axis of the detection objective (1) are aligned parallel or coaxially to one another.

10. A microscope for carrying out a method according to any one of claims 1 to 9, **characterized by** an illumination arrangement which has an illumination objective (40) and which is configured to illuminate a sample simultaneously in several different sample planes (9, 10, 14) each along an illumination line (7, 11, 13) with an illumination light beam (8, 12, 15), and **characterized by** a detection arrangement which has a detection objective (1) and at least one detector and which is configured such that each sample region, illuminated along an illumination line (7, 11, 13), is scanned using the detection objective (1) with its own detection PSF and the detection light, emanating from the illuminated sample regions, is detected simultaneously and spatially separately from one another,
wherein either the microscope comprises line detectors (16, 17, 18), which are configured to detect the detection light, emanating from the illuminated sample areas, and which are located in different detection planes that are conjugated to the respective illumination planes; or
wherein the microscope comprises a surface detector (28) which is configured to detect the detection light, emanating from the illuminated sample areas, wherein each illuminated sample area is assigned its own detection area on the surface detector (28), and wherein a means (29) for influencing the optical path length is disposed in each partial detection beam path.

11. The microscope according to claim 10, **characterized in that** sample planes (9, 10, 14) are aligned parallel to one other.

12. The microscope according to claim 10 or 11, **characterized in that**
a. illumination lines are disposed offset from one another in a direction along the sample planes (9, 10, 14) and perpendicular to the illumination light propagation direction of the illumination light beams (8, 12, 15), and/or that
b. the illumination lines (7, 11, 13) are disposed offset from one another in a direction along the sample planes (9, 10, 14) and perpendicular to the optical axis of the detection objective (1), and/or that
c. none of the other illumination lines (7, 11, 13) is disposed in the detection light beam, emanating from a sample region, illuminated with an illumination line (7, 11, 13).

13. The microscope according to any one of claims 10 to 12, **characterized in that**
a. the illumination arrangement has a beam deflection device (26) which is adjustable in terms of the deflection angle and by means of which the illumination light beams (8, 12, 15) can be shifted in parallel, and/or that
b. the detection arrangement has a beam deflection device (26) which is adjustable in terms of the deflection angle and which causes the detection light to be descanned.

14. The microscope according to any one of claims 10 to 13, **characterized in that** each illuminated sample area is assigned its own detector or that each illuminated sample area is assigned its own detection area on a common surface detector.

15. The microscope according to any one of claims 10 to 14, **characterized in that**
a. a confocal line detection takes place and/or that
b. the detection light, emanating from a sample region, illuminated along an illumination line (7, 11, 13), is detected by a detector, upstream of which a slit diaphragm is disposed, and/or that
c. the detection light, emanating from a sample region, illuminated along an illumination line (7, 11, 13), is detected by a detector which functions as a slit detector, wherein the slit detector is formed by the respective actively switched part of a surface detector.

16. The microscope according to any one of claims 10 to 15, **characterized in that** the detection arrangement has at least one beam splitter (20, 21) that splits the detection light, emanating from the sample, into different detection beam path branches depending on the location of its origin.

17. The microscope according to any one of claims 10 to 16, **characterized in that**
a. the illumination arrangement generates a light sheet (19) which, instead of illuminating with its own illumination light beam (8, 12, 15), simultaneously illuminates the sample to be examined along at least two adjacent illumination lines (7, 11, 13), and/or that
b. the illumination arrangement generates a light sheet (19) which, instead of illuminating with its own illumination light beam (8, 12, 15), simultaneously illuminates the sample to be examined along at least two adjacent illumination lines (7, 11, 13),
wherein the distance between the illumination lines (7, 11, 13) is greater than the sum of the detection PSF radius and half the extent of the light sheet in the direction of the sample plane (9, 10, 14) perpendicular to the direction of light propagation.

18. The microscope according to any one of claims 10 to 17, **characterized in that**
a. the optical axis of the illumination objective (40) and the optical axis of the detection objective (1) are disposed in planes perpendicular to one another, or that
b. the optical axis of the illumination objective (40) and the optical axis of the detection objective (1) are aligned parallel or coaxially to one another.

## Revendications

1. Procédé d'analyse d'un échantillon, dans lequel l'échantillon est éclairé simultanément dans plusieurs plans d'échantillon (9, 10, 14) différents les uns des autres respectivement le long d'une ligne d'éclairage (7, 11, 13) avec respectivement un faisceau lumineux d'éclairage (8, 12, 15) et dans lequel chaque zone d'échantillon éclairée le long d'une ligne d'éclairage (7, 11, 13) est balayée à l'aide d'un seul et même objectif de détection (1) chacune avec sa propre PSF de détection et la lumière de détection émanant des zones d'échantillon éclairées est détectée simultanément et séparément dans l'espace, et dans lequel soit
la lumière de détection émanant des zones d'échantillon éclairées est détectée à l'aide de détecteurs linéaires (16, 17, 18) qui se situent dans différents plans de détection qui sont conjugués aux plans d'éclairage respectifs ; soit
dans lequel la lumière de détection émanant des zones d'échantillon éclairées est détectée à l'aide d'un détecteur de surface (28), dans lequel une zone de détection propre est attribuée à chaque zone d'échantillon éclairée sur le détecteur de surface (28), et dans lequel un moyen (29) d'influence de la longueur de chemin optique est agencé dans chaque chemin de faisceau de détection partiel.

2. Procédé selon la revendication 1, **caractérisé en ce que** des plans d'échantillon (9, 10, 14) sont orientés parallèlement les uns aux autres.

3. Procédé selon la revendication 1 ou 2, **caractérisé en ce que**
a. les lignes d'éclairage (7, 11, 13) sont disposées décalées les unes par rapport aux autres dans une direction le long des plans d'échantillon (9, 10, 14) et perpendiculairement au sens de propagation de la lumière d'éclairage des faisceaux lumineux d'éclairage (8, 12, 15), et/ou **en ce que**
b. les lignes d'éclairage (7, 11, 13) sont disposées décalées les unes par rapport aux autres dans un sens le long des plans d'échantillon (9, 10, 14) et perpendiculairement à l'axe optique de l'objectif de détection (1), et/ou **en ce que**
c. aucune autre des lignes d'éclairage (7, 11, 13) n'est disposée dans le faisceau lumineux de détection émanant d'une zone d'échantillon éclairée avec une ligne d'éclairage (7, 11, 13).

4. Procédé selon l'une quelconque des revendications 1 à 3, **caractérisé en ce que** chacun des plans d'échantillon (9, 10, 14) est balayé successivement par déplacement synchrone, en particulier déplacement parallèle, du faisceau lumineux d'éclairage (8, 12, 15) respectif et de la PSF de détection respective.

5. Procédé selon l'une quelconque des revendications 1 à 4, **caractérisé en ce que**
a. une détection de ligne confocale est réalisée et/ou **en ce que**
b. la lumière de détection émanant respectivement d'une zone d'échantillon éclairée le long d'une ligne d'éclairage (7, 11, 13) est détectée par un détecteur, en amont duquel est placé un diaphragme à fente, et/ou **en ce que**
c. la lumière de détection émanant respectivement d'une zone d'échantillon éclairée le long d'une ligne d'éclairage (7, 11, 13) est détectée par un détecteur qui fonctionne comme détecteur à fente, dans lequel le détecteur à fente est formé par la partie respectivement activée d'un détecteur de surface.

6. Procédé selon l'une quelconque des revendications 1 à 5, **caractérisé en ce qu'**un détecteur propre est attribué à chaque zone d'échantillon éclairée ou **en ce qu'**une zone de détection propre est attribuée à chaque zone d'échantillon éclairée sur un détecteur de surface commun.

7. Procédé selon l'une quelconque des revendications 1 à 6, **caractérisé en ce que** la lumière de détection émanant de l'échantillon est répartie en fonction du lieu de sa formation au moyen d'au moins un séparateur de faisceau (20, 21) sur différentes branches de chemin de faisceau de détection.

8. Procédé selon l'une quelconque des revendications 1 à 7, **caractérisé en ce que**
a. l'échantillon est éclairé simultanément au moins le long de deux lignes d'éclairage (7, 11, 13) adjacentes plutôt qu'avec respectivement un faisceau lumineux d'éclairage (8, 12, 15) propre avec une feuille lumineuse (19), et/ou **en ce que**
b. l'échantillon est éclairé simultanément au moins le long de deux lignes d'éclairage (7, 11, 13) adjacentes plutôt qu'avec respectivement un faisceau lumineux d'éclairage (8, 12, 15) propre avec une feuille lumineuse (19), dans lequel l'écart des lignes d'éclairage (7, 11, 13) est supérieur à la somme du rayon de PSF de détection (δ) et de la demi-extension de la feuille lumineuse dans le sens du plan d'échantillon perpendiculairement au sens de propagation de la lumière.

9. Procédé selon l'une quelconque des revendications 1 à 8, **caractérisé en ce que**
a. la lumière d'éclairage est focalisée au moyen d'un objectif d'éclairage (40) et **en ce que** la lumière de détection émanant de l'échantillon traverse l'objectif de détection (1), dans lequel l'axe optique de l'objectif d'éclairage (40) et l'axe optique de l'objectif de détection (1) sont disposés dans des plans perpendiculaires l'un par rapport à l'autre, ou **en ce que**
b. la lumière d'éclairage est focalisée au moyen d'un objectif d'éclairage (40) et **en ce que** la lumière de détection émanant de l'échantillon traverse l'objectif de détection (1), dans lequel l'axe optique de l'objectif d'éclairage (40) et l'axe optique de l'objectif de détection (1) sont orientés parallèlement ou coaxialement l'un par rapport à l'autre.

10. Microscope pour la mise en œuvre d'un procédé selon l'une quelconque des revendications 1 à 9, **caractérisé par** un agencement d'éclairage qui présente un objectif d'éclairage (40) et qui est conçu pour éclairer simultanément un échantillon dans plusieurs plans d'échantillon (9, 10, 14) différents les uns des autres respectivement le long d'une ligne d'éclairage (7, 11, 13) avec respectivement un faisceau lumineux d'éclairage (8, 12, 15), et **caractérisé par** un agencement de détection qui présente un objectif de détection (1) et au moins un détecteur et qui est conçu pour que chaque zone d'échantillon éclairée le long d'une ligne d'éclairage (7, 11, 13) soit balayée à l'aide de l'objectif de détection (1) respectivement avec une PSF de détection propre et que la lumière de détection émanant des zones d'échantillon éclairées soit détectée simultanément et séparément dans l'espace,
dans lequel soit le microscope comprend des détecteurs linéaires (16, 17, 18) qui sont conçus pour détecter la lumière de détection émanant des zones d'échantillon éclairées et qui se situent dans différents niveaux de détection qui sont conjugués aux plans d'éclairage respectifs ; soit
dans lequel le microscope comprend un détecteur de surface (28) qui est conçu pour détecter la lumière de détection émanant des zones d'échantillon éclairées, dans lequel une zone de détection propre est attribuée à chaque zone d'échantillon éclairée sur le détecteur de surface (28), et dans lequel un moyen (29) pour l'influence de la longueur de chemin optique est agencé dans chaque chemin de faisceau de détection partiel.

11. Microscope selon la revendication 10, **caractérisé en ce que** des plans d'échantillon (9, 10, 14) sont orientés parallèlement les uns aux autres.

12. Microscope selon la revendication 10 ou 11, **caractérisé en ce que**
a. des lignes d'éclairage sont disposées décalées les unes par rapport aux autres dans un sens le long des plans d'échantillon (9, 10, 14) et perpendiculairement au sens de propagation de la lumière d'éclairage des faisceaux lumineux d'éclairage (8, 12, 15), et/ou **en ce que**
b. les lignes d'éclairage (7, 11, 13) sont disposées décalées les unes par rapport aux autres dans un sens le long des plans d'échantillon (9, 10, 14) et perpendiculairement à l'axe optique de l'objectif de détection (1), et/ou **en ce que**
c. aucune autre des lignes d'éclairage (7, 11, 13) n'est disposée dans le faisceau lumineux de détection émanant d'une zone d'échantillon éclairée avec une ligne d'éclairage (7, 11, 13).

13. Procédé selon l'une quelconque des revendications 10 à 12, **caractérisé en ce que**
a. l'agencement d'éclairage présente un dispositif de déviation de faisceau (26) réglable en ce qui concerne l'angle de déviation, au moyen duquel les faisceaux lumineux d'éclairage (8, 12, 15) peuvent être déplacés parallèlement, et/ou **en ce que**
b. l'agencement de détection présente un dispositif de déviation de faisceau (26) réglable en ce qui concerne l'angle de déviation, qui entraîne un déscannage de la lumière de détection.

14. Microscope selon l'une quelconque des revendications 10 à 13, **caractérisé en ce qu'**un détecteur propre est attribué à chaque zone d'échantillon éclairée ou **en ce qu'**une zone de détection propre est attribuée à chaque zone d'échantillon éclairée sur un détecteur de surface commun.

15. Microscope selon l'une quelconque des revendications 10 à 14, **caractérisé en ce que**
a. une détection de ligne confocale est réalisée et/ou **en ce que**
b. la lumière de détection émanant respectivement d'une zone d'échantillon éclairée le long d'une ligne d'éclairage (7, 11, 13) est détectée par un détecteur, en amont duquel est placé un diaphragme à fente, et/ou **en ce que**
c. la lumière de détection émanant respectivement d'une zone d'échantillon éclairée le long d'une ligne d'éclairage (7, 11, 13) est détectée par un détecteur qui fonctionne comme détecteur à fente, dans lequel le détecteur à fente s'étend à travers la partie respectivement activée d'un détecteur de surface.

16. Microscope selon l'une quelconque des revendications 10 à 15, **caractérisé en ce que** l'agencement de détection présente au moins un séparateur de faisceau (20, 21) qui répartit la lumière de détection émanant de l'échantillon en fonction du lieu de sa formation sur différentes branches de chemin de faisceau de détection.

17. Microscope selon l'une quelconque des revendications 10 à 16, **caractérisé en ce que**
a. l'agencement d'éclairage génère une feuille lumineuse (19) qui, au lieu d'un éclairage avec respectivement un faisceau lumineux d'éclairage (8, 12, 15) propre, éclaire simultanément l'échantillon à examiner le long d'au moins deux lignes d'éclairage (7, 11, 13) adjacentes, et/ou **en ce que**
b. l'agencement d'éclairage génère une feuille lumineuse (19) qui, au lieu d'un éclairage avec respectivement un faisceau lumineux d'éclairage (8, 12, 15) propre, éclaire simultanément l'échantillon à examiner le long d'au moins deux lignes d'éclairage (7, 11, 13) adjacentes,
dans lequel la distance entre les lignes d'éclairage (7, 11, 13) est supérieure à la somme du rayon de PSF de détection et de la demi-extension de la feuille lumineuse dans le sens du plan d'échantillon (9, 10, 14) perpendiculairement au sens de propagation de la lumière.

18. Microscope selon l'une quelconque des revendications 10 à 17, **caractérisé en ce que**
a. l'axe optique de l'objectif d'éclairage (40) et l'axe optique de l'objectif de détection (1) sont disposés dans des plans perpendiculaires l'un par rapport à l'autre, ou **en ce que**
b. l'axe optique de l'objectif d'éclairage (40) et l'axe optique de l'objectif de détection (1) sont orientés parallèlement ou coaxialement l'un par rapport à l'autre.
